# EUROPÄISCHE PATENTSCHRIFT

(11) **EP 1 554 564 B1**
(45) Veröffentlichungstag und Bekanntmachung des Hinweises auf die Patenterteilung: **19.12.2012**
(21) Anmeldenummer: 03718611.1
(22) Anmeldetag: 27.02.2003
(51) Int. Cl.: G01N 21/35, G01N 21/61

(54) **VORRICHTUNG ZUR DETEKTION UND VORRICHTUNG ZUR MESSUNG DER KONZENTRATION EINES STOFFES**
DETECTION DEVICE AND DEVICE FOR MEASURING THE CONCENTRATION OF A SUBSTANCE
DISPOSITIF DE DETECTION ET DISPOSITIF DE MESURE DE LA CONCENTRATION D'UNE SUBSTANCE

(30) Priorität: 17.09.2002 DE 10243014
(43) Veröffentlichungstag der Anmeldung: 20.07.2005
(73) Patentinhaber: ROBERT BOSCH GMBH, 70442 Stuttgart (DE)
(72) Erfinder: KRUMMEL, Christian, 72138 Kirchentellinsfurt (DE); ARNDT, Michael, 72762 Reutlingen (DE); SAETTLER, Michael, 72127 Kusterdingen (DE); FISCHER, Frank, 72810 Gomaringen (DE)
(86) Internationale Anmeldenummer: PCT/DE2003/000631
(87) Internationale Veröffentlichungsnummer: WO 2004/027397

(56) Entgegenhaltungen:
- DE-A- 19 835 769
- DE-A1- 19 735 379
- US-A- 5 721 430
- US-A1- 2002 000 649
- PORTNOFF M A ET AL: "ENHANCEMENT OF MOS GAS SENSOR SELECTIVITY BY 'ON-CHIP' CATALYTIC FILTERING" SENSORS AND ACTUATORS B, ELSEVIER SEQUOIA S.A., LAUSANNE, CH, Bd. B05, Nr. 1 / 4, 1. August 1991 (1991-08-01), Seiten 231-235, XP000239568 ISSN: 0925-4005

## Beschreibung

### Stand der Technik

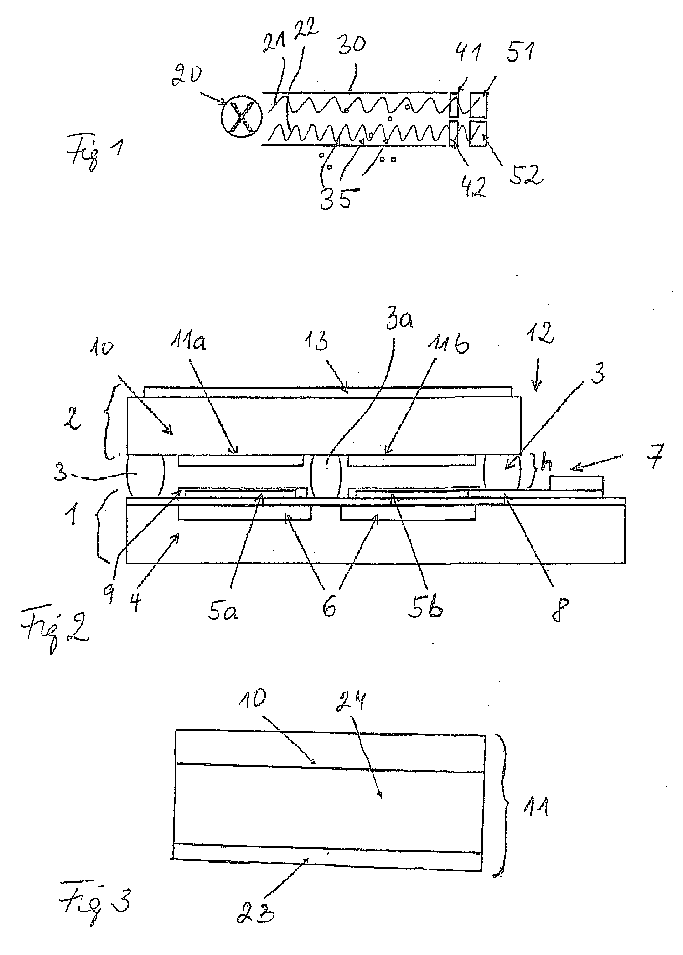

Die Erfindung geht aus von einer Vorrichtung zur Detektion bzw. einer Vorrichtung zur Messung der Konzentration eines Stoffes nach der Gattung der nebengeordneten Ansprüche. Es sind bereits Vorrichtungen zur Detektion von Strahlungssignalen bekannt, die beispielsweise zur Bestimmung der Gaskonzentration mittels InfrarotAbsorption dienen. Störende Gase in einem Gasvolumen, beispielsweise im Innenraum eines Kraftfahrzeuges, sind beispielsweise CO2 CO, H2O oder auch CH4, wobei das Kohlendioxid CO2 insbesondere aus der Atemluft von in dem Gasvolumen befindlichen Personen bzw. auch aus CO2-Klimaanlagen stammen kann. Solche störenden Gase werden gemäß allgemein bekannten Gasdetektoren detektiert. Solche Gasdetektoren finden auch in den Bereichen Laboranalytik, Sicherheitstechnik, Nahrungsmittelindustrie, Klimaanlagen, Gebäudetechnik, Medizin, Haushalt, Umweltschutz usw. Anwendung. Zur Bestimmung der Konzentration solcher störender Gase werden unterschiedliche Sensorprinzipien verwendet, deren Einsatz im Wesentlichen von der Empfindlichkeit abhängig gemacht wird. Beispielsweise gibt es chemische Sensoren, bei denen eine chemisch reaktive Schicht ihren Widerstand ändert, wenn sie in Kontakt mit spezifischen Gasen kommt. Diese Sensoren sind jedoch sehr empfindlich, auch auf andere Gase als die zu detektierenden Gase oder aber auch empfindlich auf Umwelteinflüsse. Weiterhin ist die Langzeit-Stabilität solcher Sensoren ein Problem. Ein anderes physikalisches Verfahren macht die unterschiedliche thermische Leitfähigkeit von beispielsweise CO2 und Luft, d.h. im Wesentlichen Stickstoff, zunutze, um Rückschlüsse auf den Kohlendioxid-Gehalt in einem Gasvolumen, beispielsweise im Innenraum eines Kraftfahrzeugs, zu ziehen. Weiterhin ist es bekannt, die Absorption von Infrarotlicht durch Gasmoleküle zur Detektion solcher Gasmoleküle einzusetzen. Wird nämlich ein Gasmolekül, das aus mehreren gleichen oder unterschiedlichen Atomen besteht, durch Infrarotlicht angeregt, so wird es in höhere Energiezustände überführt. Es werden beispielsweise Rotations- oder Vibrationsmomente angeregt, deren Energiezustand molekülsp ezifisch ist. Durch die Anregung der höheren Energiezustände wird der optischen Strahlung Energie entzogen; die charakteristischen Absorptionsbanden der Gase liegen typischerweise im Infrarotbereich bei Wellenlängen zwischen 1 µm und 10 µm. Dies bedeutet, dass Infrarotlicht, welches durch einen solchen gaserfüllten Raum läuft, zunehmend an Gesamtintensität verliert, wobei die Abschwächung eine Funktion der vorhandenen Gase und ihrer Konzentration ist Durch die spektral aufgelöste Messung der Intensität kann die Intensität des Lichtes im Wellenlängenbereich der Absorptionsbande der jeweiligen Gase ermittelt werden. Dadurch ist es möglich, selbst Gemische aus mehreren Gasen mit hoher Auflösung aufzuschließen. Ein Gerät zur Bestimmung der Gaskonzentration durch Infrarotabsorption gemäß dem Stand der Technik ist in Figur 1 dargestellt und besteht typischerweise aus einer Infrarotlichtquelle 20, einer Küvette 30 bzw. einer Röhre 30, die mit dem zu analysierenden Gasgemisch gefüllt ist und den Lichtstrahl führt, und einen oder mehrere Filter 41, 42, welche die spektrale Zerlegung des Infrarotlichtes bewirkt, wobei hinter den Filtern 41, 42 ein oder mehrere Detektoren 51, 52 vorgesehen sind mit dem bzw. mit denen die Intensität der Wärmestrahlung nach der spektralen Zerlegung gemessen wird. Solche bekannten Vorrichtungen weisen Jedoch den Nachteil auf, dass sie kostspielige Anordnungen sind.

Aus der US 5,721,430 A ist ein Gassensor bekannt, bei dem mittels Infrarotstrahlung die Konzentration eines Gases erfasst wird. Der Gassensor ist dabei in einem Gehäuse untergebracht, welches gegenüber der Umgebung hermetisch abgedichtet ist. Um die Gaskonzentration über die spektralen Anteile im Infrarotspektrum zu erfassen, ist in dem Gehäuse ein lichtdurchlässiges Fenster vorgesehen, welches die entsprechenden Anteile des (Infrarot-)Lichts durchlässt.

Aus dem Paper "Enhancement of MOS gas sensor selectivity by ,on-chip' catalytic filtering", Portnoff et al, Sensors and Actuators, B5 (1991), p.231-235 ist ein Gassensor bekannt, bei dem sich auf einem Aluminiumsubstrat zwei Au-Elektroden mit einem auf diesen Elektroden aufgebrachten aktiven Bereich aus einem Zinoxid-Film befinden. Der aktive Bereich ist weiterhin durch einen nichtporösen Glasring eingegrenzt und mit einem abgeschiedenen porösen Glasfilm abgedeckt. Als Filter wird abschließend ein Film aus PT und AI verwendet

Die Schrift DE 198 35 769 A1 beschreibt einen optoelektronischen Gassensor, bei dem auf einem Halbleitersubstrat mehrere voneinander getrennte lichtempfindliche Elemente und ein mittig dazwischen liegender Lichtsender integriert sind. Zusätzlich werden die lichtempfindlichen Elemente und der Lichtsenders mit einem gassensitiven und für das verwendete Licht durchlässigen Optodenmaterials bedeckt. Durch eine laterale Aussendung des Lichts erfolgt eine Totalreflexion in dem Optomaterial, so dass das Licht zu den lichtempfindlichen Elementen geführt werden kann.

Aus der Schrift US 2002/0000649 A1 ist ein mikromechanischer Aufbau bekannt, bei dem zwei Chips oder Wafer mit Hilfe einer Flip-Chip-Technik miteinander verbunden werden können. Durch eine derartige Verbindung kann ein hermetisch abgeschlossenes Volumen erzeugt werden, indem zwischen die beiden Chips bzw. Wafer ein Abstandshalter, beispielsweise einer Lot-Schicht, eingebracht wird. Innerhalb des abgeschlossenen Volumens können verschiedene Sensorstrukturen wie einen kapazitiven Beschleunigungssensor, einen Mikroresonator zur Erfassung elektrostatischer Bewegungen, einen Drucksensor oder auch Strahlungssensoren bzw. Micropiles oder Bolometer untergebracht werden.

### Vorteile der Erfindung

Die erfindungsgemäße Vorrichtung mit den Merkmalen der nebengeordneten Ansprüche hat dem gegenüber den Vorteil, dass eine kostengünstige Vorrichtung zur Detektion von Strahlungssignalen und eine kostengünstige Vorrichtung zur Messung der Konzentration eines Stoffes möglich sind. Weiterhin ist es vorteilhaft, dass die Vorrichtung eine erhöhte Dichtheit zwischen dem Filter und dem Detektor aufweist. Weiterhin ist es erfindungsgemäß vorteilhaft, dass eine einfache Aufbau- und Verbindungstechnik verwendet wird, was wiederum die Kosten senkt. Die erfindungsgemäße Vorrichtung weist keine beweglichen Teile auf, weshalb eine große Fall- und Überlastfestigkeit gegeben ist. Es können durch die hermetische Verbindung zwischen Detektor und Filter eine enge Spezifikation der Filtertoleranzen gewährleistet werden. Weiterhin ist es erfindungsgemäß möglich, die Vorrichtung sehr klein auszubilden, was wiederum Kostenvorteile und Einbauvorteile mit sich bringt. Erfindungsgemäß ist es möglich und vorgesehen_{;} eine Vielzahl von Filtern für zwei bis über sechs Gase gemeinsam und kombiniert miteinander auszubilden. Eine solche Integration von Filterarrays ist damit erfindungsgemäß kostengünstig und einfach möglich.

Durch die in den Unteransprüchen aufgeführten Maßnahmen sind vorteilhafte Weiterbildungen und Verbesserungen der in den nebengeordneten Ansprüchen angegebenen Vorrichtungen möglich.

Besonders vorteilhaft ist, dass die Detektoren als Thermopiles, temperatursensible Widerstände oder temperatursensible Dioden vorgesehen sind. Damit ist es möglich, auf kostengünstige und bewährte Bauelemente als Detektoren zurück zu greifen. Weiterhin ist es von Vorteil, dass eine Absorberschicht auf wenigstens einem der Detektoren vorgesehen ist. Hierdurch kann die Effektivität und die Sensibilität des Detektors erhöht werden. Weiterhin ist von Vorteil, dass der erste Chip ein erstes Substrat umfasst, wobei der erste und zweite Detektor von dem ersten Substrat thermisch entkoppelt ist. Dadurch ist es erfindungsgemäß möglich, dass die erfindungsgemäße Vorrichtung besonders unempfindlich gegen äußere Störgrößen wie beispielsweise die Umgebungstemperatur ist. Weiterhin ist von Vorteil, dass der erste und/oder zweite Filter als Fabry-Perot-Filter vorgesehen ist. Dadurch ist es besonders einfach und kostengünstig möglich, einen schmalbandigen Filter vorzusehen.

### Zeichnungen

Ein Ausführungsbeispiel der Erfindung ist in der Zeichnung dargestellt und in der nachfolgenden Beschreibung näher erläutert.

Es zeigen:
Figur 1 eine Anordnung zur Messung der Gaskonzentration gemäß dem Stand der Technik,
Figur 2 eine erfindungsgemäße Vorrichtung zur Detelction von Strahlungssignalen und Figur 3 einen bekannten Fabry-Perot-Filter.

### Beschreibung des Ausführungsbeispiels

In Figur 1 ist die bereits beschriebene Anordnung zur Detektion einer Gaskonzentration dargestellt. In der Röhre 30 bzw. in der Küvette 30 befinden sich zum einen die mittels der Bezugszeichen 21, 22 bezeichneten Strahlengänge bzw. Strahlenverläufe der Infrarotstrahlung, ausgehend von der Lichtquelle 20 und die zu delektierenden Gasmoleküle 35. Am Ort der Filter 51, 52 ist die Strahlung, ausgehend von der Strahlungsquelle 20, in bestimmten Wellenlängenbereichen durch die Gasmoleküle abgeschwächt. Der Abfall der Intensität des Lichtes durch Infrarotabsorption wird in gasspezifischen Wellenlängenbereichen gemessen. Zur Separierung der interessanten Wellenlängenbereiche wird das erste Filter 41 eingesetzt, welches nur schmalbandige Transmission zulässt. Die transmittierte Strahlung wird dann mittels einem wellenlängenunspezifischen Detektor 51 hinter dem Filter 41 gemessen. Um Rückschlüsse auf die Gaskonzentration zu ziehen, wird die Infrarotintensität im Bereich der Absorptionsbande - über den Filter und Detektor 41, 51- mit der Intensität der Lampe in einem Referenzbereich - zweiten Filter und Detektor 42, 52 - verglichen, in dem es zu keiner signifikanten Infrarotabsorption durch relevante Gase kommt. Hierfür wird der weitere Filter 42 und der entsprechende Detektor 52 benötigt, der ein definiertes Referenzspektrum passieren lässt.

In Figur 2 ist der prinzipielle Aufbau einer erfindungsgemäßen Vorrichtung zur Detektion von Strahlungssignalen bzw. der erfindungsgemäße Sensor schematisch dargestellt. Der Sensor umfasst erfindungsgemäß einen Detektorchip 1 und einen Filterchip 2, wobei der Filterchip 2 mit einem Wafer-Bonding-Verfahren über Verbindungsstege 3 auf dem Detektorchip 1 aufgebracht ist. Der Detektorchip 1 wird im Folgenden auch als erster Chip 1 bezeichnet und umfasst ein erstes Substrat 4, welches insbesondere als Siliziumsubstrat 4 vorgesehen ist. Auf dem ersten Substrat 4 ist ein erster Temperaturfühler 5a und ein zweiter Temperaturfühler 5b als erster Detektor 5a und zweiter Detektor 5b angeordnet. Erfindungsgemäß ist es durchaus vorgesehen, dass weitere Temperaturfühler, die jedoch in Figur 2 nicht dargestellt sind, auf dem ersten Substrat 4 angeordnet sind. Die Temperaturfühler 5a, 5b bzw. Detektoren 5a, 5b können beispielsweise als Thermopiles, als temperatursensible Widerstände oder als temperatursensible Dioden vorgesehen sein. Auf dem ersten Detektor 5a bzw. dem zweiten Detektor 5b kann es erfindungsgemäß vorgesehen sein, jeweils eine Absorberschicht aufzubringen. Diese Absorberschicht ist in Figur 2 für den ersten Detektor 5a mit dem Bezugszeichen 9 bezeichnet. Die Absorberschicht 9 ist zur Absorption langwelliger Infrarotstrahlung geeignet. Erfindungsgemäß ist es vorgesehen, dass der Absorber bei Temperaturen beständig ist, wie sie bei dem erfindungsgemäß eingesetzten Bond-Verfahren zwischen dem ersten Chip 1 und dem zweiten Chip 2 eingesetzt werden. Folgende Materialien sind erfindungsgemäß als Absorberschicht vorgesehen:
Beständige Polymere, dotierte Gläser, dielektrische Schichtfolgen, hochdotierte Halbleiter, schmalbandige Halbleiter, Metalle o.ä. Erfindungsgemäß ist es weiterhin vorgesehen, eine thermische Entkopplung zwischen dem Detektor 5a, 5b und dem ersten Substrat 4 vorzusehen. Hierzu ist beispielsweise ein Hohlraum zwischen dem Detektor 5a, 5b und dem ersten Substrat 4 vorgesehen, wie er in Figur 2 mittels des Bezugszeichens 6 dargestellt ist. Zur Erzeugung eines solchen Hohlraums 6 bzw. einer solchen Kaverne 6 wird beispielsweise eine Oberflächenmikromechanik-Technik eingesetzt. Für solche Techniken ist die Verwendung von porösem Silizium in Teilbereichen des ersten Substrats 4 und anschließendem Umlagern des porösen Siliziums derart, dass ein tiefer gelegener Bereich vorgesehen ist, der einen Hohlraum bildet und dass ein höher gelegener Bereich vorgesehen ist, welcher eine Deckschicht des ersten Substrats 4 zur Aufnahme des Detektors 5a, 5b bildet. Weiterhin ist es möglich, einen solchen Hohlraum 6 mittels einer bekannten Ätzung durch Xenondifluorid, ClF3, ClF5, durch andere Interhalogenverbindungen, die das Substrat 4 isotrop ätzen können, oder durch plasmaaktiviertes NF3, durchzuführen.
   Neben dem Detektor 5a, 5b ist es erfindungsgemäß auch vorgesehen, dass ein Heizleiter im Bereich der Detektoren 5a, 5b vorgesehen ist. Dies ist jedoch in Figur 2 nicht dargestellt. Ein solcher Heizleiter ist bei der erfindungsgemäßen Vorrichtung zum Selbsttest des Sensors bzw. der Vorrichtung vorgesehen. Über den Heizleiter wird erfindungsgemäß ein kurzzeitiger Wärmepuls auf der thermisch entkoppelten Fläche des Detektors 5a, 5b erzeugt. Damit ist die Funktion des Thermofühlers 5a, 5b prüfbar.

Anschlüsse des Temperaturfühlers 5a, 5b werden über Leiterbahnen, die in Figur 2 mit dem Bezugszeichen 8 versehen sind, aufBond-Pads 7 geführt. Die Leiterbahnen 8 sollen eine geringe Topographiebreite von < 5 µm aufweisen, so dass die Bondverbindung 3 zwischen dem ersten Chip 1 und dem zweiten Chip 2 einen hermetischen Einschluss der filigranen Thermofühler 5a, 5b gewährleistet. Erfindungsgemäß können die Thermofühler 5a, 5b auch durch Bond-Stege voneinander getrennt sein. Ein solcher trennender Bond-Steg ist in Figur 2 mit dem Bezugszeichen 3a bezeichnet. Durch solche trennenden Bond-Stege 3a können die Thermofühler 5a, 5b besser getrennt und besser entkoppelt vorgesehen sein. Die Höhe h der Bondstege 3, 3a wird derart gelegt, dass der Thermofühler 5a, 5b nicht in mechanischem Kontakt mit den Filterschichten, die in Figur 2 mit dem Bezugszeichen 11a, 11b bezeichnet sind, kommen kann. Eine mit dem Bezugszeichen h versehene Höhe der Bond-Stege 3, 3a von 3 µm bis 12 µm ist erfindungsgemäß ausreichend. Jedoch ist dieser Wert für die Funktionalität des Sensors bzw. der Vorrichtung nicht von größerer Bedeutung.

Der Filterchip 2, der im Folgenden auch als zweiter Chip 2 bezeichnet wird, umfasst einen Träger 10, wobei der Träger 10 beispielsweise als ein Siliziumsubstrat oder auch als ein Glassubstrat vorgesehen ist. Auf der Unterseite des Trägers 10 , der im Folgenden auch als zweites Substrat 10 bezeichnet wird, sind Fabry-Perot-Filter 11a und 11b vorgesehen. Diese werden im Folgenden auch als erster Filter 11a und als zweiter Filter 11b bezeichnet. Der erste Filter 11a dient erfindungsgemäß zur Filterung der Referenzwellenlänge und der zweite Filter b dient der Filterung der Analysewellenlänge. Die Analysewellenlänge wird im Folgenden auch als Absorptionsbande bezeichnet. Die Filter 11a, 11b sind erfindungsgemäß insbesondere als ein Einschichtsystem, beispielsweise aus Siliciumdioxid oder Siliciumnitrid, vorgesehen, oder sie können auch aus Vielfachschichten aufgebaut sein. Erfindungsgemäß ist der erste Filter 11a für eine Referenzwellenlänge ausgelegt. Der zweite Filter 11b ist für die Analysewellenlänge im Bereich der Absorptionsbande des zu detektierenden Gases vorgesehen. Die Filter 11a, 11b müssen sich daher unterscheiden und müssen somit lokal strukturiert und getrennt voneinander hergestellt werden. Im Filterchip 2 bzw. im zweiten Chip 2, der als Kappe für den ersten Chip 1 bzw. den Detektorchip 1, wirken soll, sind Aussparungen 12 geätzt, durch welche Bond-Drähte, die jedoch in Figur 2 nicht dargestellt sind, an die Metallkontakte 7 bzw. Bond-Pads 7 herangeführt werden können. Bei der Erzeugung des Durchgangsloches 12 muss darauf geachtet werden, dass die Filterstrukturen 11a, 11b nicht angeätzt werden.

Zur Verbindung des Kappenchips 2 bzw. des zweiten Chips 2 mit dem Detektorchip 1 wird ein Bond-Verfahren eingesetzt, wobei hier anodisches Bonden, Seal-Glas-Bonden, Polymere-Bonden, eutektisches Bonden, Laserdurchstrahlschweissen oder ein anderes Verfahren erfindungsgemäß eingesetzt werden. Derartige Bond-Verfahren arbeiten in der Regel bei Temperaturen von 150°C bis etwa 500°C. Aus diesem Grund ist es' notwendig, dass die Materialien der beteiligten Filterstrukturen 11a, 11b, der beteiligten Detektorstrulcturen 5a, 5b und der Absorberschicht 9 bei diesen Temperaturen nicht zersetzt werden. Erfindungsgemäß wird bevorzugt, ein Verkappungsverfahren zu verwenden, bei dem Vakuum unterhalb des zweiten Chips 2 erzeugt werden kann. Dadurch ist es erfindungsgemäß möglich, eine thermische Entkopplung des Detektors 5a, 5b von der Umgebung hervorzurufen bzw. zu vergrößern. Die Verkappung des ersten Chips 1 mit dem zweiten Chip 2 erfolgt erfindungsgemäß insbesondere auf Wafer-Ebene, d.h. eine Vielzahl von zweiten Chips 2 werden in Form eines Kappen-Wafers mit den darauf aufgebrachten Filtern 11a, 11b beispielsweise mit einem Seal-Glas (beim Seal-Glas-Bonden) bedruckt, anschließend getempert und auf eine Mehrzahl von ersten Chips 1, die zusammen den Detektorwafer bilden, gebondet. Danach kann die gesamte Anordnung aus Filter und Detektor auf Waferebene elektrisch und eventl. auch elektrooptisch getestet werden. Erst im Anschluss daran werden die einzelnen erfindungsgemäßen Vorrichtungen, bei denen der erste Chip 1 mit dem zweiten Chip 2 verbunden ist, durch bekannte Verfahren gesägt und vereinzelt.

Zur Detektion von Gasen kann die Lichtquelle, die in Figur 1 mit dem Bezugszeichen 20 versehen ist, mit der die breitbandige Infrarotstrahlung erzeugt wird, gepulst betrieben werden. Dies ist vorteilhaft, wenn die thermische Entkopplung des Fühlers 5a, 5b durch den Hohlraum 6 bzw. die Kaverne 6 mangelhaft ist und im kontinuierlichen Betrieb eine signifikante Erwärmung der Umgebung des Fühlers 5a, 5b eintritt. Eine weitere erfindungsgemäße Möglichkeit, einer solchen unvorteilhaften Erwärmung der Umgebung des Fühlers 5a, 5b zu begegnen, besteht darin, auf der den Filterschichten 11a, 11b gegenüber liegenden Seite des zweiten Chips 2 einen, in Figur 2 mit dem Bezugszeichen 13 versehenen Passfilter aufzubringen, welcher Wellenlängen zwischen der Absorptionskante des Materials des zweiten Chips, d.h. im Wesentlichen des Materials des zweiten Substrats 10 und den Referenz- bzw. Detektionswellenlängen abschneidet. An der Stelle des Passfilters 13 kann es erfindungsgemäß auch vorgesehen sein, eine Antireflexionsschicht vorzusehen. Diese Antireflexionsschicht kann erfindungsgemäß durchaus auch zusätzlich zum Passfilter 13 vorgesehen sein. Bei der Verwendung von Silizium als zweites Substrat 10 entspricht der Absorptionskante beispielsweise eine Wellenlänge von ca. 1 µm. Durch das erfindungsgemäße Aufbringen des Passfilters 13 wird verhindert, dass höhere Filterordnungen bei der Messung eine Rolle spielen. Der Passfilter 13 kann auch m der verpackung des Sensorelements integriert sein. Die Schicht 13 ist erfindungsgemäß insbesondere aus einem Polymer, einem Halbleiter, einer dielektrischen Vielfachschicht o.ä. vorgesehen.

Erfindungsgemäß wird ein neuartiger, kostengünstiger Sensor bzw. eine erfindungsgemäße Vorrichtung zur Verfügung gestellt, mit dem bzw. bei der Lichtintensität auf einfache Weise spektral aufgelöst gemessen werden kann. Derartige Sensoren bzw. Vorrichtungen sollen erfindungsgemäß zur Bestimmung der Zusammensetzung von Gemischen aus zwei oder mehreren Gasen eingesetzt werden. Sowohl der Filter 11a, 11b als auch der Detektor 5a, 5b werden bei der erfindungsgemäßen Vorrichtung mit Methoden der Silizium-Mikromechanik hergestellt. Es handelt sich um eine Vorrichtung, bei der die Filter 11a, 11b und die Detektoren 5a, 5b in einer einzigen Vorrichtung integriert vorgesehen sind. Der erste Chip oder auch Detektorchip 1 wird vollständig in Oberflächenmikromechanik hergestellt. Die Detektorstruklur 5a, 5b wird anschließend verkappt. Erfindungsgemäß werden diskrete statische Filter in der Kappe vorgesehen, die zur Filterung der Absorptions- und Referenzbanden über den Detektorstrukturen 5a, 5b platziert werden. Die erfindungsgemäße Vorrichtung kann, insbesondere auf der Oberseite des zweiten Chips, weitere Passfilterschichten 13 umfassen, die höhere Ordnungen der Fabry-Perot-Filter bzw. der Filter 11a, 11b unterdrücken, was zu einer Absorption bei kürzeren Wellenlängen führt. Die erfmdungsgemäße Vorrichtung bzw. der erfindungsgemäße Sensor besitzt mehrere entscheidende Vorteile gegenüber bisher bekannten Vorrichtungen, was sich insbesondere auf die kostengünstige Herstellbarkeit durch eine Batch-Prozessierung in Siliziummikromechanik bezieht, auf einen vergleichsweise einfachen Aufbau bzw. eine einfache Aufbau- und Verbindungstechnik und die Möglichkeit zur Integration von mehreren Filterarrays für 2 bis über 6 Gase.

In Figur 3 ist schematisch der Aufbau eines Fabry-Perot-Filters dargestellt. Eine solche Struktur ist insgesamt mittels des Bezugszeichens 11 dargestellt. Eine solche Struktur ist in der erfindungsgemäßen Vorrichtung einsetzbar, Prinzipiell besteht ein Fabry-Perot-Filter 11 aus zwei planparallelen Spiegeln, zwischen denen ein Medium 24 liegt, das den optischen Weg und damit die zentrale Wellenlänge der Passfilterfunktion bestimmt. Die Dicke und der Brechungsindex der Filterkavität 24 bzw. des Mediums 24 bestimmt die mittlere Filtenwellenlänge. Die Einstellung der Referenz- und Analysewellenlänge der Vorrichtung erfolgt über die Auslegung dieses Mediums 24 bzw. dieser Filterkavität 24 mittels ihrer Schichtdicke, ihres Brechungsindex und ob diese Schicht aus mehreren Lagen besteht oder nicht. Die beiden Spiegel des Fabry-Perot-Filters 11 werden beispielsweise durch einen Sprung im Brechungsindex zwischen dem Material des Mediums 24 und dem Material des zweiten Substrats 10 bzw. zwischen dem Material des Mediums 24 und dem Material der Abdeckschicht 23 erzeugt. Um die Filtercharakteristik des Fabry-Perot-Filters 11 zu schärfen, kann das zweite Substrat 10 und die Abdeckschicht 23 auch aus Vielfachschichten bzw. aus semitransparenten Metallschichten erzeugt werden. Erfindungsgemäß besteht die Abdeckschicht 23 aus einem Material, welches resistent gegen Prozesse zur Kappungsstrukturierung, wie beispielsweise KOH-Ätzen o.ä. oder gegen Prozesse der Strukturierung von dielektrischen Schichten bei der Filterherstellung wie beispielsweise HF-Ätzen ist. Erfindungsgemäß wird bevorzugt, sowohl für den ersten Filter 11a als auch für den zweiten Filter 11b einen Schichtsandwich zur Erzeugung des Filters 11a, 11b zu verwenden, wobei für die Abdeckschicht 23 als Material Polysilizium, Siliziumdioxid und/oder Siliziumnitrid gewählt wird. Der Grad der Reflektivität der Spiegel bestimmt die Breite der Filterfunktion.

## Patentansprüche

1. Vorrichtung zur Detektion von Strahlungssignalen mit einem ersten Detektor (5a), mit einem zweiten Detektor (5b), mit einem ersten Filter (11a) und mit einem zweiten Filter (11b), wobei
- der erste und zweite Detektor (5a, 5b) auf einem ersten Chip (1) vorgesehen ist, und
- der erste und zweite Filter (11a, 11b) auf einem zweiten Chip (2) vorgesehen ist und
- der erste Chip (1) und der zweite Chip (2) hermetisch dicht miteinander verbunden, insbesondere mittels eines Wafer-Sonding-Verfahrens, sind und
- der erste Chip (1) ein erstes Substrat (4) umfasst, wobei der erste und zweite Detektor (5a, 5b) von dem ersten Substrat (4) thermisch entkoppelt ist,
**dadurch gekennzeichnet dass**
im Bereich der Detektoren (5a, 5b) ein Heizleiter zur Durchführung eines Selbsttests der Detektoren vorgesehen ist, wobei durch den Heizleiter ein kurzzeitiger Wärmepuls auf einer thermisch entkoppelten Fläche des Detektors 5a, 5b erzeugbar ist.

2. Vorrichtung nach Anspruch 1, **dadurch gekennzeichnet, dass** die Detektoren (5a, 5b) als Thermopiles, temperatursensible Widerstände oder temperatursensible Dioden vorgesehen sind.

3. Vorrichtung nach einem der vorhergehenden Ansprüche, **dadurch gekennzeichnet, dass** eine Absorberschicht (9) auf wenigstens einem der Detektoren (5a, 5b) vorgesehen ist.

4. Vorrichtung nach einem der vorhergehenden Ansprüche, **dadurch gekennzeichnet, dass** der erste und/oder der zweite Filter (11a, 11b) als Fabry-Perot-Filter vorgesehen ist.

5. Vorrichtung nach einem der vorhergehenden Ansprüche, **dadurch gekennzeichnet, dass** außer dem ersten und zweiten Detektor (5a, 5b) weitere Detektoren und außer dem ersten und zweiten Filter (11a, 11b) weitere Filter vorgesehen sind.

6. Vorrichtung zur Messung der Konzentration eines Stoffes im Strahlengang einer Strahlungsquelle mit einer Vorrichtung zur Detektion von Strahlungssignalen nach einem der vorhergehenden Ansprüche.

## Claims

1. Device for detecting radiation signals comprising a first detector (5a), comprising a second detector (5b), comprising a first filter (11a) and comprising a second filter (11b), wherein
- the first and second detectors (5a, 5b) are provided on a first chip (1), and
- the first and second filters (11a, 11b) are provided on a second chip (2), and
- the first chip (1) and the second chip (2) are hermetically tightly connected to one another, in particular by means of a wafer bonding method, and
- the first chip (1) comprises a first substrate (4), wherein the first and second detectors (5a, 5b) are thermally decoupled from the first substrate (4), **characterized in that**
a heating conductor for carrying out a self-test of the detectors is provided in the region of the detectors (5a, 5b), wherein the heating conductor can generate a momentary heat pulse on a thermally decoupled area of the detector (5a, 5b).

2. Device according to Claim 1, **characterized in that** the detectors (5a, 5b) are provided as thermopiles, temperature-sensitive resistors or temperature-sensitive diodes.

3. Device according to either of the preceding claims, **characterized in that** an absorber layer (9) is provided on at least one of the detectors (5a, 5b).

4. Device according to any of the preceding claims, **characterized in that** the first and/or the second filter (11a, 11b) are/is provided as a Fabry-Perot filter.

5. Device according to any of the preceding claims, **characterized in that** further detectors in addition to the first and second detectors (5a, 5b) and further filters in addition to the first and second filters (11a, 11b) are provided.

6. Device for measuring the concentration of a substance in the beam path of a radiation source comprising a device for detecting radiation signals according to any of the preceding claims.

## Revendications

1. Dispositif de détection de signaux de rayonnement, le dispositif présentant un premier détecteur (5a), un deuxième détecteur (5b), un premier filtre (11a) et un deuxième filtre (11b),
le premier et le deuxième détecteur (5a, 5b) étant prévus sur une première puce (1),
le premier et le deuxième filtre (11a, 11b) étant prévus sur une deuxième puce (2),
la première puce (1) et la deuxième puce (2) étant reliées l'une à l'autre de manière hermétiquement étanche, en particulier au moyen d'une opération de liaison de galette,
la première puce (1) comportant un premier substrat (4), le premier et le deuxième détecteur (5a, 5b) étant découplés thermiquement du premier substrat (4),
**caractérisé en ce que**
un conducteur de chaleur qui exécute un auto-test des détecteurs est prévu au niveau des détecteurs (5a, 5b) et
**en ce que** le conducteur de chaleur permet de délivrer une brève impulsion thermique sur une surface thermiquement découplée du détecteur (5a, 5b).

2. Dispositif selon la revendication 1, **caractérisé en ce que** les détecteurs (5a, 5b) sont prévus sous la forme de thermopiles, de résistances sensibles à la température ou de diodes sensibles à la température.

3. Dispositif selon l'une des revendications précédentes, **caractérisé en ce qu'**une couche d'absorption (9) est prévue sur au moins l'un des détecteurs (5a, 5b).

4. Dispositif selon l'une des revendications précédentes, **caractérisé en ce que** le premier et/ou le deuxième filtre (11a, 11b) sont prévus comme filtres de Fabry-Perot.

5. Dispositif selon l'une des revendications précédentes, **caractérisé en ce que** d'autres détecteurs sont prévus en plus du premier et du deuxième détecteur (5a, 5b) et **en ce que** d'autres filtres sont prévus en plus du premier et du deuxième filtre (11a, 11b).

6. Dispositif de mesure de la concentration d'une substance dans le parcours de rayonnement d'une source de rayonnement, le dispositif étant doté d'un dispositif de détection de signaux de rayonnement selon l'une des revendications précédentes.
